# EUROPEAN PATENT APPLICATION

(11) **EP 3 266 606 A1**
(43) Date of publication of application: **10.01.2018**
(21) Application number: 16020259.4
(22) Date of filing: 04.07.2016
(51) Int. Cl.: B32B 7/12, B32B 15/08, B32B 15/20, B32B 27/32, B32B 27/34, B32B 27/36, B65D 75/36

(54) **DEEP-DRAWABLE FILM**

(71) Applicant: Amcor Flexibles Rorschach AG, 9400 Rorschach (CH)
(72) Inventor: Benz, Patrik, 9402 Mörschwil (CH)
(74) Representative: Gernet, Samuel Andreas

(57) **Abstract**

Deep-drawable packaging film (60, 70, 80, 90, 93, 95, 98) sustaining an extension ratio of at least 1.2 and having an aluminium foil (10) as a core layer and comprising on one side of the aluminium foil (10) a polymerfilm (21, 25, 50) and on the other side of the aluminium foil (10) opposite to the polymer film (21, 25, 50) a pigmented or unpigmented sealing layer (30, 35). One side of said polymer film (21, 25, 50) comprises a printing and/or said polymer film (21, 25, 50) comprises a pigmented layer. The polymer film (21, 25, 50) is laminated to the aluminium foil (10) using a laminating adhesive layer (40). The polymer film (21, 25, 50) is semi-crystalline and has a degree of crystallisation between 20 to 70%. The polymer film (21, 25, 50) further has a Young's modulus of 2000 MPa to 2700 MPa.

## Description

The invention relates to a deep-drawable packaging film sustaining an extension ratio of at least 1.2 and having an aluminium foil as a core layer and comprising on one side of the aluminium foil a polymer film and on the other side of the aluminium foil opposite to the polymer film a pigmented or unpigmented sealing layer, wherein one side of said polymer film comprises a printed and/or a pigmented layer, and wherein the polymer film is laminated to the aluminium foil using a laminating adhesive layer. The invention relates also to a method for manufacturing said deep-drawable packaging film and its use.

The use of capsules with pre-dosed beverage ingredients for e.g. preparing brewed coffee or tea has gained a high popularity due to the convenience of preparation and the constant quality of the delivered beverages. Those capsules provide a storage and brewing volume for the beverage substance such as roast coffee or insoluble tea ingredient. The beverage quality highly depends inter alia on the protection against light, oxygen and humidity of the beverage ingredients by the capsule.

Considering the capsule packaging, a favorite material is aluminium thanks to its ability to provide a full barrier to light, humidity and oxygen, its forming capacity, its piercing properties required for water injection into the capsule and/or extraction of brewed beverage, its mechanical rigidity, its recyclability and manufacturing costs. In contrast hereto, capsules made of polymers alone provide a lower and shorter protection to oxygen, are more difficult to pierce and usually are neither recyclable, nor home compostable.

The outer surface of capsules for preparing brewed coffee or tea is preferably coloured or has a printing. Because the outer side of those capsules usually is fluidly associated to the hot water supply of a brewing machine, the colour or printing ink has to be suitable for direct food contact and has to comply with the corresponding regulations. Regular packaging inks do not comply with said regulations and consequently direct contact of those inks with the hot water supply must be avoided.

Existing capsules are usually coated with a lacquer on their outside, wherein typically coloured epoxy or polyester lacquers are used. Those lacquers are relatively viscous thereby making them non-suitable for delivering a precise thin printed motif or a photo-realistic design. Consequently, only a coarse printing definition is made possible by this way.

Furthermore, aluminium capsules must be deep enough to provide a sufficient volume for storing a required amount of beverage ingredients.

Therefore, there is a need to provide a deep-drawable packaging film sustaining a predefined extension ratio that delivers most of the advantages of aluminium while providing an improved printing ability and a full compliance with the regulations for food packaging.

US 2013/0295377 A1 discloses a formable laminate comprising a polyester film and a metal foil for packaging batteries or medical products, wherein the polyester film satisfies certain stress conditions.

EP 0 123 974 B1 discloses a multilayered co-extruded composite film as self-supporting deepdrawn film for manufacturing a bottom part of a deep-freeze-resistant vacuum deep-drawn packaging or a vacuum deep-drawn packaging for sharp-edged packaged goods having two external layers which correspond with regard to material and thickness and which comprise linear polyethylene or high-density polyethylene and having two internal layers which correspond with regard to material and thickness and which comprise an ethylene/methacrylic acid copolymer cross-linked with metal ions or an ethylene/vinyl acetate copolymer, in which film the external layers are connected to the internal layers by melt-bonding and the internal layers are connected to one another by blocking.

US 2008/0187695 A1 discloses a package having a printed laminate, wherein the package comprising a first polymer film having a reverse printed matter thereon, a second polymer film laminated to the first polymer film to provide a composite, wherein the printed matter is between the first and second polymer films, and a woven bag enclosed by the composite, wherein the second polymer film of the composite isolates the printed matter from cross contamination with contents intended for the woven bag.

The prior art documents do not describe a satisfactory solution for providing an aluminium-based printed packaging film sustaining a predefined extension ratio required for manufacturing deep-drawn capsules used as containers of pre-dosed beverage ingredients for brewing hot drinks.

The aim of present invention is to provide a deep-drawable and sealable packaging film sustaining a predefined extension ratio and comprising an aluminium foil, wherein the deep-drawable packaging film further has at least on one side a printed or coloured appearance that has a full compliance with the regulations for food packaging, wherein the ink or colour used must not be compatible with said regulations for food packaging.

According to the present invention there is provided a deep-drawable packaging film sustaining an extension ratio of at least 1.2 and having an aluminium foil as a core layer and comprising on one side of the aluminium foil a polymer film and on the other side of the aluminium foil opposite to the polymer film a pigmented or unpigmented sealing layer, wherein one side of said polymer film comprises a printed and/or a pigmented layer, and wherein the polymer film is laminated to the aluminium foil using a laminating adhesive layer, wherein the polymer film is semi-crystalline having a degree of crystallisation between 20 to 70% and having a Young's modulus of 2000 MPa to 2700 MPa.

Preferred embodiments of the inventive deep-drawable packaging film are described in the dependent claims.

The semi-crystalline polymer film may be pigmented or unpigmented. In a preferred embodiment the polymer film is either an unprinted pigmented single layer polymer film or a reverse printed unpigmented or pigmented single layer polymer film or a surface printed pigmented or unpigmented single layer polymer film or a coextruded multilayer polymer film, wherein the coextruded multilayer polymer film comprises at least one pigmented layer and wherein the coextruded multilayer polymer film may comprise a reverse or surface printing. In case of a surface printing, the ink layer or the printing is preferably protected by an outermost overprint varnish coating.

In a further preferred embodiment the semi-crystalline polymer film is a coextruded multilayer polymer film consisting of an inner pigmented and an outer unpigmented semi-crystalline polymer layer. This coextruded two layer polymer film is preferably reverse printed, i.e. the printing is arranged on the pigmented polymer layer and is located between the coextruded polymer film and the laminating adhesive layer deposited onto the aluminium foil.

The deep-drawable packaging film comprises on the side of the aluminium foil lying opposite to the semi-crystalline polymer film a sealing layer that may either be a sealing lacquer, or a film made of polypropylene that is laminated to the aluminium foil using a laminating adhesive layer. The sealing layer, i.e. the sealing lacquer or the polypropylen film, may be pigmented or unpigmented.

The deep-drawable packaging film not only sustains a certain extension ratio, but also allows sustaining a forming process, especially a deep drawing process, without forming cracks in the polymer film. For this reason, the polymer film preferably has a tensile stress at break of between 40 to 55 MPa. The extension ratio is the ratio between the final length of a film strip and its initial length.

The polymer film is a functional barrier layer preventing the migration of ink particles or its components to the outer free surface of the polymer film, i.e. the surface of the semi-crystalline polymer film lying opposite to the aluminium foil. If the polymer film is pigmented, the pigments are chemically linked to the polymer compounds, or only an inner layer of the polymer film is pigmented and an outer layer of the polymer film is free of any pigments. The distribution of the pigments may be homogeneous or may vary over the polymer film or the pigmented layer. The polymer film or at least an outer layer of the polymer film complies with the European regulation EC10/2011 on "plastic materials and articles intended to come into contact with food".

The degree of crystallisation defines the amount of crystallized polymers in respect of the total amount of polymers and amounts preferably to 20 to 40% and lies especially preferred between 23 and 30%.

The degree of crystallisation is measured by differential scanning calometry (DSC) according to DIN EN ISO 11357-3:2013-4. The glass transition temperature Tg and the melting temperature Tₘ of a semi-crystalline, 25 µm thick PET film have been determined by DSC, wherein T_{g} is 74°C and Tₘ is 249°C for a PET film having a degree of crystallisation of 26.7%. The crystal size is typically in the order of 10 to 20 nm.

The polymer film may be formed of a single polymer layer or of two or more layers made of the same or of different polymer materials. The polymer film preferably comprises or consists of semi-crystalline polyethylene terephthalate (PET), polyamide (PA) or polypropylene (PP). These polymers are preferably non-oriented in order to reduce the risk of cracks during a forming process.

In a further preferred embodiment, the semi-crystalline polymer film is surface printed, wherein the ink layer comprising the printing is coated with an outermost continuous overprint varnish. In this case, the overprint varnish prevents the migration of ink particles to the outer free surface of the deep-drawable packaging film.

In an even further preferred embodiment, the polymer film comprises an inner pigmented and reverse printed polymer film layer and an outer translucid polymer film layer. Both polymer film layers are semi-crystalline. The ink layer is arranged between the inner pigmented polymer layer and the aluminium foil. This allows the production of a deep-drawable packaging film having an outer coloured appearance with a printing. A polymer film comprising a pigmented and an unpigmented polymer film layer preferably is manufactured by coextrusion of the two semi-crystalline polymer film layers.

In another preferred embodiment the polymer film of the deep-drawable packaging film may consist of pigmented and/or unpigmented semi-crystalline, non-oriented cast PET.

The Young's modulus of the semi-crystalline polymer film preferably lies between 2100 MPa and 2300 MPa. The Young's modulus defines the relationship between stress and strain in the polymer film.

The semi-crystalline polymer film may comprise 0.1 to 1.5 weight-% of an anti-blocking agent. The antiblocking agent may be organic or inorganic. Inorganic antiblocking agents for present application include SiO₂, magnesium silicate, CaCO₃, alumina-silicate ceramic, aluminium silicate and aluminium potassium silicate. Organic antiblocking agents may comprise ethylene bisstearamide (EBS), stearyl erucamide, stearamide, glycerol monostearate (GMS), Zinc stearate, silicone or PTFE. Antiblocking agents decrease the adhesion of adjacent films.

The polymer film has a preferred thickness of 8 to 30 µm, in particular 15 to 30 µm. Said thickness range allows the polymer film to provide an effective barrier to the migration of ink and provides an adequate protection of the printing against scratching and abrasion.

The unprinted and unpigmented polymer film is preferably translucid, which means in the sense of present invention that it lets pass at least 95% of the incident light. This is especially important if a reverse printed polymer film is applied and ensures that the inner printed ink layer is well visible from the outside.

The sealing layer acts on the one hand as a protective layer against direct contact of a packaged content with the aluminium foil and on the other hand provides the ability of the packaging film to be sealed to itself or another film or foil. The sealing layer may be pigmented or unpigmented.

The sealing layer may be made of a pigmented or unpigmented heat seal lacquer or may consist of a polypropylene (PP) film glued to the aluminium foil by an intermediate laminating adhesive layer. If a heat seal lacquer is applied, it has preferably a mass per square meter of 5 to 15 g/m², in particular 8 to 12 g/m². In case the sealing layer consists of a film made of PP laminated to the one side of the aluminium foil, the PP film has a preferred thickness of between 25 µm to 35 µm, in particular 28 µm to 32 µm.

The laminating adhesive layer used either for laminating the reverse printed or pigmented polymer layer and/or the sealing layer made of PP to the aluminium foil preferably has a mass per square meter of 3 g/m² to 8 g/m², notably 4.5 g/m² to 6 g/m². The laminating adhesive layer between the aluminium foil and the reverse printed or pigmented polymer film preferably is a continuous adhesive layer covering the whole interface between the film and the aluminium foil. The laminating adhesive is preferably a solvent based adhesive and is especially preferred a polyurethane based adhesive.

The aluminium foil consists preferably of a soft annealed aluminium foil made of a AA8011A alloy. A preferred thickness of the aluminium foil is between 80 and 120 µm. The tensile strength of the aluminium foil preferably lies within 90 to 120 MPa and has an elongation at break of between 16 to 36%.

The aluminium foil provides a good rigidity, formability and gas barrier characteristics required for food packages made out of the inventive deep-drawable packing film.

Another aspect of the invention concerns the provision of a method for manufacturing a flat, deep-drawable packaging film according to the invention. This method includes providing an aluminium foil, a semi-crystalline polymer film, adhesives and a pigmented or unpigmented sealing lacquer or a pigmented or unpigmented polypropylen film, the polymer film as the case may be is then provided with a reverse or surface printing, wherein the polymer film has a degree of crystallisation between 20 to 70 % and has a Young's modulus of 2000 MPa to 2700 MPa, wherein at least one side of the aluminium foil or the unprinted or reverse printed side of the polymer film is coated with a laminating adhesive layer, the semi-crystalline unprinted or reverse printed side of the polymer film is then laminated to the aluminium foil using the laminating adhesive layer and the surface of the aluminium foil opposite to the semi-crystalline polymer film is either coated with the pigmented or unpigmented heat seal lacquer, or the pigmented or unpigmented film made of polypropylene (PP) is laminated to said aluminium surface using an laminating adhesive layer.

The application of the printing onto the semi-crystalline polymer film is preferably made by digital printing, rotogravure printing or flexo printing. This allows a precise printing of motifs by ink dots. Furthermore, ink dots of different colours may be applied side-by-side in order to produce coloured motifs by superimposing different coloured dots. The ink dots have a preferred size of 20 to 80 µm, in particular 20 to 60 µm. Said definition enables the production of very sharp and contrasted motifs and/or lettering.

Because the deep-drawable packing film is usually deformed when manufacturing a package, the printing is preferably distortion corrected relative to a subsequent deforming process, in particular relative to a deep-drawing process.

The distortion correction is preferably done in a partially automated way, i.e. the graphics to be applied on the polymer film are pre-distorted by a known computer program to compensate for the distortion that occurs during the forming, especially the deep-drawing process. The calculated pre-distortion function is then modified manually by the user to provide the desired results, or the pre-distortion method may use one or more parameters such that the user can change properties of the pre-distortion by changing one or more of the parameters.

The semi-crystalline polymer film preferably is a pigmented and/or unpigmented PET film that is manufactured by first drying a PET granulate at a temperature of 150°C to 170°C, melting the dried PET granulate comprising if necessary an anti-blocking agent and/or pigments in a barrel and mixing the melt to get a homogeneous temperature of between 280 and 290 °C a nd screw extruding the melt at a constant pressure of between 35 and 45 bar, wherein the melt is casted through a die and the extruded product is then cooled by passing it through chill rolls at a film speed of between 30 to 50 m/min and the chill rolls having a temperature of between 5 to 50'C.

A still further object of the invention relates to a use of the inventive deep-drawable film having a pigmented and/or unpigmented polymer film and a distortion corrected printing for manufacturing a cup-shaped container out of a flat inventive packaging film, especially a container having a depth-to-width ratio of at least 0.3, wherein the polymer film constitutes the outer layer of the capsule.

The cup-shaped capsules are usually closed after filling the ingredients into the cup-shaped capsule or container by sealing a lid on the rim of the open capsule or container. The lid may consist of a blank or lacquered aluminium foil and/or may consist of or may comprise a plastic layer. The outer side of said lids may comprise embossments or the lid may comprise a reverse or surface printed outer film.

The inventive deep-drawable film may be used for manufacturing self-standing packages that confer a defined shape upon forming.

The extension ratio of the deep-drawable laminate preferably is at least 1.6. The cup-shaped capsule or container preferably has a depth-to-width ratio of between 0.5 and 1.2.

When roast and ground coffee is the main beverage ingredient of a cup-shaped capsule, the aluminium protects the coffee against oxidation at ambient atmosphere and prevents carbon gas of coffee from escaping out of a sealed capsule.

The invention will now be described by way of examples and with reference to the accompanying drawings in which:
Figure 1 shows schematically a cross section through an inventive packaging film;
Figure 2 shows a schematic cross section of second embodiment of an inventive packaging film;
Figure 3 shows schematically a cross section through a third embodiment of an inventive packaging film;
Figure 4 shows a schematic cross section through a fourth embodiment of an inventive packaging film.
Figure 5 shows a schematic cross section through a fifth embodiment of an inventive packaging film.
Figure 6 shows a schematic cross section through a sixth embodiment of an inventive packaging film.
Figure 7 shows a schematic cross section through a seventh embodiment of an inventive packaging film.

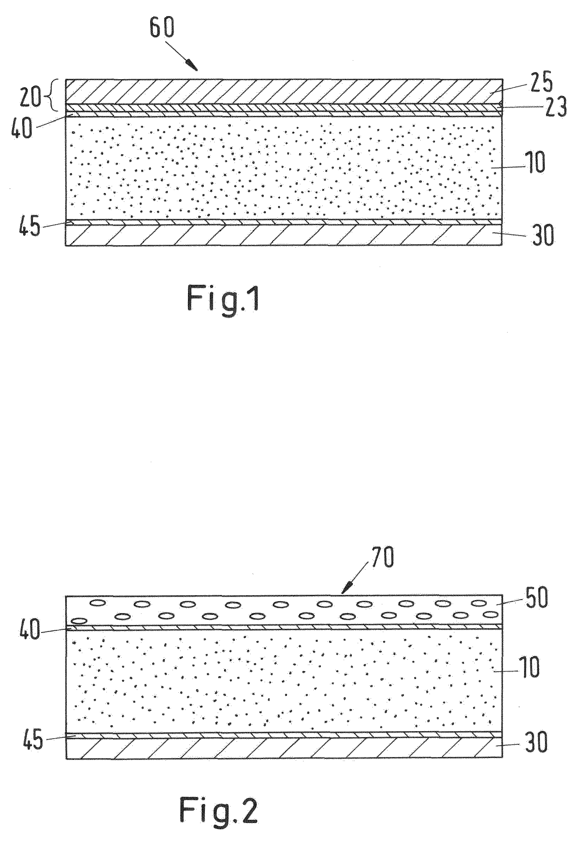

Figure 1 shows schematically an example of an inventive deep-drawable packaging film 60 comprising an aluminium foil 10 as a middle layer. A reverse printed polymer layer 20 is laminated to one side of the aluminium foil 10 using a laminating adhesive layer 40. The reverse printed polymer film 20 consists of a semi-crystalline polymer film 25 and an ink layer 23 printed onto the polymer film 25. The printing may be distortion corrected relative to a subsequent deep-drawing process. The polymer film 25 functions as barrier layer that prevents migration of ink to the outer, free surface of the polymer film. The ink layer 23 forms the interface between the polymer film 25 and the adhesive layer 40. The other side of the aluminium foil 10 opposite to the reverse printed polymer film 20 comprises a sealing layer or sealing film 30 made of a polypropylene that is laminated to the aluminium foil 10 using a laminating adhesive layer 45.

Figure 2 shows schematically a cross section through a deep-drawable packaging film 70 comprising an aluminium foil 10 as a middle or core layer. In contrast to the embodiment shown in figure 1, the semi-crystalline polymer film 50 that is laminated to one side of the aluminium foil 10 is pigmented and does not comprise any printing. In a further embodiment (not shown in figure 2) the outer free surface of the pigmented semi-crystalline polymer film 50 may be covered by an unpigmented semi-crystalline polymer film. The lamination of said pigmented polymer layer 50 with the aluminium foil 10 is done by a laminating adhesive layer 40. The other side of the aluminium foil opposite to the pigmented polymer film 50 comprises a film 30 made of polypropylene as a sealing layer. The polypropylene film 30 is laminated to the aluminium foil 10 using a laminating adhesive layer 45.

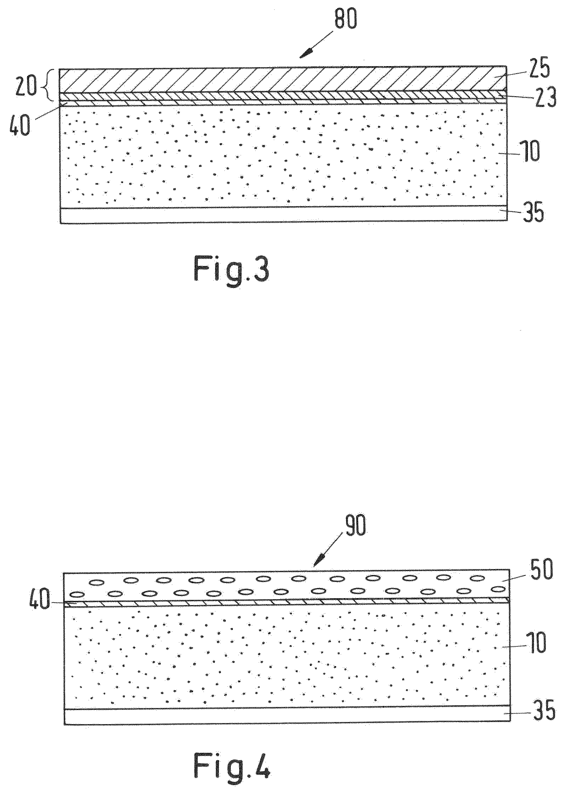

Figure 3 shows a schematic cross section through a deep-drawable packaging film 80 having an aluminium foil 10 as a middle or core layer and on one side of the aluminium layer a reverse printed polymer film 20 laminated to the aluminium foil 10 using a laminating adhesive layer 40. The reverse printed polymer film 20 consists again of a semi-crystalline polymer film 25 and an ink layer 23 printed onto the polymer film 25, wherein the polymer film 25 functions as barrier layer that prevents migration of ink to the outer, free surface of the polymer film. The ink layer 23 forms the interface between the semi-crystalline polymer film 25 and the laminating adhesive layer 40. The other side of the aluminium foil opposite to the reverse printed polymer film 20 is coated by a layer of a heat seal lacquer 35, wherein preferably no adhesion layer is applied, i.e. the heat seal lacquer is directly applied to the one aluminium surface. The heat seal lacquer may be coulored, i.e. may comprise pigments, or may be transparent or opaque without comprising any additional pigments.

Figure 4 shows a schematic cross section through a deep-drawable packaging film 90 having an aluminium foil 10 as middle or core layer and on one side of the aluminium foil 10 a pigmented semi-crystalline polymer film 50 that is laminated to the aluminium foil 10 using a laminating adhesive layer 40. The other side of the aluminium foil 10 opposite to the pigmented polymer film 50 comprises a pigmented or unpigmented layer 35 of a heat seal lacquer. The heat seal lacquer is preferably applied directly onto the aluminium surface without using an additional adhesive layer.

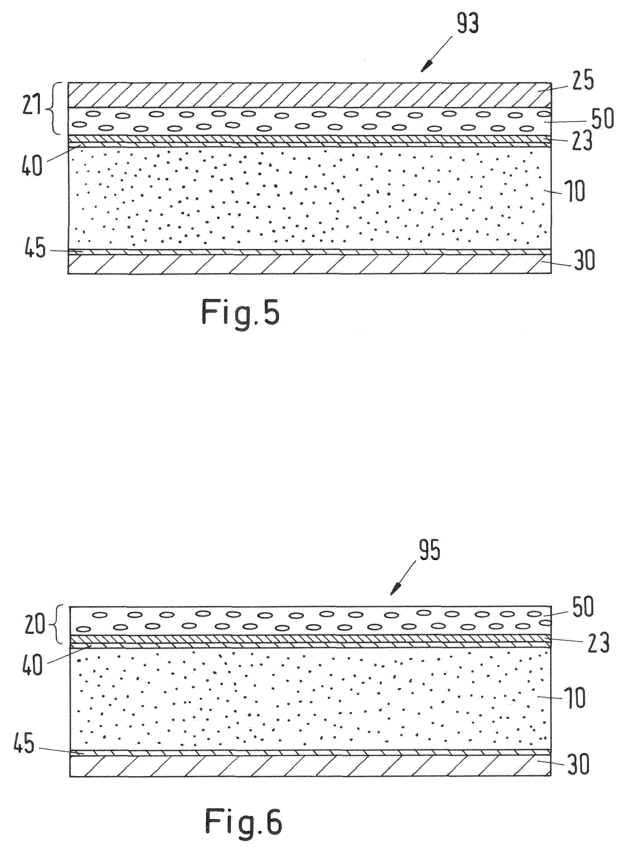

Figure 5 shows schematically a cross section of another example of an inventive deep-drawable packaging film 93 comprising again an aluminium foil 10 as a middle or core layer and comprising on one side of the aluminium foil 10 a polymer film 21 consisting of two layers, namely an inner pigmented semi-crystalline polymer film layer 50 and an outer transparent or semi-transparent semi-crystalline polymer film layer 25. The inner pigmented and the outer transparent or semi-transparent polymer layers are preferably coextruded polymer layers 25, 50 and together form the semi-crystalline polymer film 21. The inner pigmented layer 50 comprises a reverse printing represented as ink layer 23. The ink layer 23 of the reverse printed pigmented polymer film layer 50 is arranged between the inner pigmented polymer layer 50 and the aluminium foil 10 or more precisely between the inner polymer layer 50 and the laminating adhesive layer 40, because the polymer film 21 is laminated to the aluminium foil 10 using a laminating adhesive layer 40. The outer polymer film 25 is translucent and functions as barrier layer that prevents migration of ink to the outer, free surface of the outer polymer film 25. The pigmented polymer film 50 is reverse printed after coextruding the pigmented and unpigmented polymer layers 25, 50 and before laminating the coextruded and reverse printed polymer film 21 to the aluminium foil 10. The other side of the aluminium foil 10 opposite to the polymer film 21 comprises a sealing layer made of a polypropylene film 30 that is laminated to the aluminium foil 10 using a further laminating adhesive layer 45.

Figure 6 shows schematically a cross section of a further inventive deep-drawable packaging film 95 having a similar structure as that shown in figure 5 except that there is only a reverse printed semi-crystalline pigmented film 20 comprising a pigmented semi-crystalline polymer layer 50 and an inner ink layer 23, i.e. instead of a coextruded polymer film 21 consisting of a pigmented and a unpigmented polymer layer this polymer layer 20 consists only of a pigmented polymer film 50. The pigmented polymer film 50 is partially translucid and comprises a reverse printing 23 on its inner surface directed to the aluminium foil 10. The polymer film 20 is again laminated to the aluminium foil 10 using a laminating adhesive layer 40. The other side of the aluminium foil 10 opposite to the polymer film 20 comprises a sealing layer made of a polypropylene film 30 that is laminated to the aluminium foil 10 using a laminating adhesive layer 45.

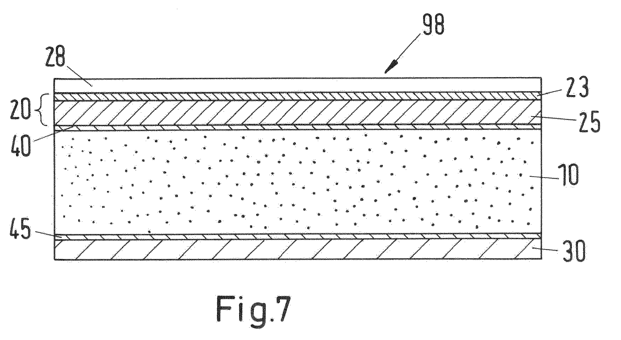

Figure 7 shows schematically a cross-section of a further inventive deep-drawable packaging film 98 comprising an aluminium foil 10 as a middle or core layer and comprising on one side of the aluminium foil 10 a semi-crystalline polymer film 25 laminated to the aluminium foil 10 using a laminating adhesive layer 40. The outer surface of the polymer layer 25 opposite to the aluminium foil comprises a surface printing 23 that is coated by a continuous overprint varnish layer 28. The other side of the aluminium foil 10 opposite to the semi-crystalline polymer film 25 comprises a sealing layer made of a pigmented or unpigmented polypropylene film 30 that is laminated to the aluminium foil 10 using a laminating adhesive layer 45. In an even further embodiment (not shown) the other side of the aluminium foil 10 opposite to the semi-crystalline polymer film 25 may be coated by a pigmented or unpigmended sealing lacquer instead of having a laminated polypropylene film 30. The latter embodiment preferably does not have a laminating adhesive layer 45 between the aluminium foil 10 and the sealing lacquer.

## Claims

1. Deep-drawable packaging film (60, 70, 80, 90, 93, 95, 98) sustaining an extension ratio of at least 1.2 and having an aluminium foil (10) as a core layer and comprising on one side of the aluminium foil (10) a polymer film (21, 25, 50) and on the other side of the aluminium foil (10) opposite to the polymer film (21, 25, 50) a pigmented or unpigmented sealing layer (30, 35), wherein at least one side of said polymer film (21, 25, 50) comprises a printed and/or a pigmented layer, and wherein the polymer film (21, 25, 50) is laminated to the aluminium foil (10) using a laminating adhesive layer (40),
**characterised in that**
the polymer film (21, 25, 50) is semi-crystalline having a degree of crystallisation between 20 to 70% and having a Young's modulus of 2000 MPa to 2700 MPa.

2. Deep-drawable packaging film according to claim 1, wherein the polymer film (21, 25, 50) is either an unprinted pigmented single layer polymer film (50) or a reverse printed unpigmented or pigmented single layer polymer film (20) or a surface printed pigmented or unpigmented single layer polymer film (20) or a coextruded multilayer polymer film (21), wherein the coextruded multilayer polymer film (21) comprises at least one pigmented layer (50) and wherein the coextruded multilayer polymer film (21) may comprise a reverse or surface printing.

3. Deep-drawable packaging film according to claim 2, wherein the coextruded multilayer polymer film (21) consists of an inner pigmented (50) and an outer unpigmented layer (25) wherein the coextruded polymer film (21) preferably is reverse printed.

4. Deep-drawable packaging film according to claim 2, wherein in case of a surface printed polymer film (20) the printing of the polymer film is coated with an outermost overprint varnish layer (28).

5. Deep-drawable packaging film according to any one of claims 1 to 4, wherein the polymer film (21, 25, 50) comprises or consists of semi-crystalline polyethylene terephthalate (PET), polyamide (PA) or polypropylene (PP) or a mixture thereof.

6. Deep-drawable packaging film according to claim 5, wherein the polymer film (21, 25, 50) consists of or comprises a film layer made of pigmented or unpigmented semi-crystalline, non-oriented cast PET.

7. Deep-drawable packaging film according to any one of claims 1 to 6, wherein the degree of crystallisation of the polymer film (21, 25, 50) is between 20 and 40%, in particular between 23 and 30%.

8. Deep-drawable packaging film according to any one of claims 1 to 7, wherein the Young's modulus of the semi-crystalline polymer film (21, 25, 50) is between 2100 MPa and 2300 MPa.

9. Deep-drawable packaging film according to any one of claims 1 to 8, wherein the semi-crystalline polymer film (21, 25, 50) further comprising 0.1 to 1.5 weight-% of an anti-blocking agent.

10. Deep-drawable packaging film according to any one of claims 1 to 9, wherein the polymer film (21, 25, 50) has a thickness of 8 to 30 µm, preferably 15 to 30 µm.

11. Deep-drawable packaging film according to any one of claims 1 to 10, wherein the polymer film (21, 25, 50) has a tensile stress at break of between 40 to 55 MPa.

12. Deep-drawable packaging film according to any one of claims 1 to 11, wherein the sealing layer consists of a pigmented or unpigmented heat seal lacquer (35) preferably having a mass per square meter of 5 to 15 g/m², in particular 8 to 12 g/m².

13. Deep-drawable packaging film according to any one of claims 1 to 11, wherein the sealing layer consists of a pigmented or unpigmented polypropylene (PP) film (30) glued to the aluminium foil (10) by an intermediate laminating adhesive layer (45).

14. Deep-drawable packaging film according to claim 13, wherein the polypropylene film (30) has a thickness of between 25 µm to 35 µm, preferably 28 µm to 32 µm.

15. Deep-drawable packaging film according to any one of claims 1 to 14, wherein the laminating adhesive layer/s (40, 45) has/have a mass per square meter of 3 g/m² to 8 g/m², preferably 4.5 g/m² to 6 g/m².

16. Deep-drawable packaging film according to any one of claims 1 to 15, wherein the aluminium foil (10) is a soft annealed aluminium foil made of an AA8011A alloy having a thickness of between 80 to 120 µm.

17. Method for manufacturing a flat, deep-drawable packaging film (60, 70, 80, 90, 93, 95, 98) according to any one of claims 1 to 16, **characterised in that** an aluminium foil (10), a semi-crystalline polymer film, adhesives (40, 45) and a pigmented or unpigmented sealing lacquer (35) or a pigmented or unpigmented polypropylen film (30) are provided and the polymer film (21, 25, 50) as the case may be is provided with a reverse or surface printing, wherein the polymer film (21, 25, 50) has a degree of crystallisation between 20 to 70 % and having a Young's modulus of 2000 MPa to 2700 MPa, at least one side of the aluminium foil (10) or the unprinted or reverse printed side of the polymer film (20, 21, 50) is coated with a laminating adhesive layer (40), the semi-crystalline unprinted or reverse printed side of the polymer film (20, 21, 50) is then laminated to the aluminium foil (10) using the laminating adhesive layer (40) and the surface of the aluminium foil (10) opposite to the semi-crystalline polymer film (25, 50) is either coated with the pigmented or unpigmented heat seal lacquer (35), or the pigmented or unpigmented film (30) made of polypropylene (PP) is laminated to said aluminium surface using an adhesive layer (45).

18. Deep-drawable packaging film according to claim 17, wherein the unprinted and unpigmented polymer film or layer (25) is translucid letting pass at least 95% of the incident light.

19. Method according to claim 17, wherein the semi-crystalline polymer film (20) is a pigmented or unpigmented single layer (25, 50), or the polymer film is a coextruded multilayer film (21) comprising at least one pigmented layer (50).

20. Method according to claim 19, wherein semi-crystalline multilayer polymer films (21) are produced by coextruding pigmented and unpigmented polymer layers.

21. Method according to claim 20, wherein the coextruded semi-crystalline polymer film (21) consists of an inner pigmented (50) and an outer unpigmented layer (25) and wherein the coextruded polymer film (21) preferably is reverse printed.

22. Method according to one of claims 17 to 21, wherein the polymer film consist of one or several semi-crystalline layers, wherein each layer is made of polyethylene terephthalate (PET), polyamide (PA) or polypropylene (PP) or a mixture thereof.

23. Method according to one of claims 17 to 22, wherein the semi-crystalline polymer film (25, 50) is manufactured by first drying a PET granulate at a temperature of 150°C to 170°C, melting the dried PE T granulate comprising if necessary an anti-blocking agent and/or pigments in a barrel and mixing the melt to get a homogeneous temperature of between 280 and 290 °C and screw extruding the melt at a constant pressure of between 35 and 45 bar, wherein the melt is casted through a die and the extruded product is then cooled by passing it through chill rolls at a film speed of between 30 to 50 m/min and the chill rolls having a temperature of between 5 to 50 °C.

24. Method according to one of claims 17 to 23, wherein the printing is distortion corrected relative to a subsequent deep-drawing process.

25. Use of the deep-drawable laminate (60, 70, 80, 90, 93, 95, 98) according to any one of claims 1 to 16 comprising a semi-crystalline polymer film (21, 25, 50) and as the case may be a distortion corrected printing for manufacturing a cup-shaped container which is not for a single serve beverage capsule.
